# EUROPEAN PATENT APPLICATION

(11) **EP 4 583 372 A1**
(43) Date of publication of application: **09.07.2025**
(21) Application number: 23859777.7
(22) Date of filing: 14.06.2023
(51) Int. Cl.: H02K 5/08, F16K 31/04, H02K 11/02, H02K 15/14, H02K 37/14

(54) **STATOR UNIT, ELECTRIC VALVE, AND MANUFACTURING METHOD FOR STATOR UNIT**

(30) Priority: 31.08.2022 JP 2022138705
(71) Applicant: Fujikoki Corporation, Tokyo 158-0082 (JP)
(72) Inventor: YASUMOTO, Yuta, Tokyo 158-0082 (JP); ARAI, Yusuke, Tokyo 158-0082 (JP); YOSHIDA, Tatsuya, Tokyo 158-0082 (JP); NARUKAWA, Bunta, Tokyo 158-0082 (JP)
(74) Representative: Ter Meer Steinmeister & Partner
(86) International application number: PCT/JP2023/022039
(87) International publication number: WO 2024/048007

(57) **Abstract**

[Object] To provide a stator unit, an electric valve, and a method for manufacturing a stator unit that are capable of suppressing an electromagnetic wave emitted from a stator and inhibiting malfunction in electronic components.

[Solution] A stator unit (8) includes a stator (80) and a housing (100) that is made of a synthetic resin and is integrally molded with the stator (80). The stator unit (8) includes an electromagnetic wave suppression film (90) that is disposed between the stator (80) and the housing (100).

## Description

### Technical Field

The present invention relates to a stator unit, an electric valve, and a method for manufacturing a stator unit.

### Background Art

Patent Literature 1 discloses an electric valve according to the related art installed in an air conditioning system. The electric valve in Patent Literature 1 includes a housing having a housing space. A can, a stator, and a control circuit board are disposed in the housing space. A magnet rotor is disposed inside the can. The magnet rotor and the stator are members of a stepping motor.

### Citation List

### Patent Literature

Patent Literature 1: Japanese Patent No. 6826727

### Summary of Invention

### Technical Problem

Currents are supplied to the stator to rotate the magnet rotor. The currents supplied to the stator may cause the stator to emit electromagnetic waves. The electromagnetic waves may affect the control circuit board and electronic devices near the electric valve. Electromagnetic wave suppression paint applied to the stator can suppress the electromagnetic waves emitted from the stator. The electromagnetic wave suppression paint may flake off the stator. The electromagnetic wave suppression paint has conductivity. Thus, the electromagnetic wave suppression paint flaking off the stator may cause a short circuit in the control circuit board or the electronic devices, resulting in malfunction in electronic components mounted on the control circuit board or the electronic devices.

Accordingly, it is an object of the present invention to provide a stator unit, an electric valve, and a method for manufacturing a stator unit that are capable of suppressing an electromagnetic wave emitted from a stator and inhibiting malfunction in electronic components. Solution to Problem

To achieve the object above, a stator unit according to an aspect of the present invention includes a stator, a housing that is made of a synthetic resin and is integrally molded with the stator, and an electromagnetic wave suppression film disposed between the stator and the housing.

In the present invention, preferably, the stator includes an A-phase stator and a B-phase stator. Preferably, the A-phase stator includes an A-phase yoke that has a hollow circular annular shape, an A-phase bobbin that is disposed in the A-phase yoke, and an A-phase coil that is wound around the A-phase bobbin. Preferably, the B-phase stator includes a B-phase yoke that has a hollow circular annular shape, a B-phase bobbin that is disposed in the B-phase yoke, and a B-phase coil that is wound around the B-phase bobbin. Preferably, the A-phase stator is disposed coaxially with the B-phase stator. Preferably, a first end surface of the A-phase yoke is in contact with a first end surface of the B-phase yoke. Preferably, a second end surface of the A-phase yoke, an outer circumferential surface of the A-phase yoke, a second end surface of the B-phase yoke, and an outer circumferential surface of the B-phase yoke form a yoke outer surface. Preferably, the electromagnetic wave suppression film is disposed between the yoke outer surface and the housing.

In the present invention, preferably, the stator further includes a resin member that is integrally molded with the A-phase stator and the B-phase stator. Preferably, the resin member includes a terminal supporting portion. Preferably, the terminal supporting portion extends from the A-phase yoke and the B-phase yoke in a direction perpendicular to a direction of an axis. Preferably, a coil terminal connected to the A-phase coil and a coil terminal connected to the B-phase coil project from a tip end surface of the terminal supporting portion. Preferably, the electromagnetic wave suppression film is disposed between the terminal supporting portion and the housing.

In the present invention, preferably, the resin member further includes an annular portion that has a circular annular shape. Preferably, the annular portion is disposed on the second end surface of the A-phase yoke or the second end surface of the B-phase yoke. Preferably, the electromagnetic wave suppression film is disposed between the annular portion and the housing.

In the present invention, a part of the terminal supporting portion, the part including the tip end surface, is disposed in a circuit-board housing space provided in the housing. Preferably, the coil terminal is connected to a circuit board disposed in the circuit-board housing space. Preferably, an entire surface of the part of the terminal supporting portion directly faces the circuit-board housing space.

In the present invention, preferably, the synthetic resin of which the housing is made includes an electromagnetic wave suppression material.

To achieve the object above, a stator unit according to another aspect of the present invention includes a stator, and a housing that is made of a synthetic resin and is integrally molded with the stator. The synthetic resin of which the housing is made includes an electromagnetic wave suppression material.

To achieve the object above, an electric valve according to another aspect of the present invention is an electric valve including a valve body assembly and the stator unit. The valve body assembly includes a case having a circular cylindrical shape and a magnet rotor disposed inside the case. The stator is disposed outside the case.

To achieve the object above, a method for manufacturing a stator unit according to an aspect of the present invention is a method for manufacturing a stator unit including a stator and a housing that is made of a synthetic resin and is integrally molded with the stator. The method includes forming an electromagnetic wave suppression film on a surface of the stator, and forming the housing by injection molding so that the housing covers the electromagnetic wave suppression film.

### Advantageous Effects of Invention

The stator unit includes the electromagnetic wave suppression film disposed between the stator and the housing. With this configuration, the electromagnetic wave suppression film is held between the stator and the housing, inhibiting the electromagnetic wave suppression film from coming off. Therefore, electromagnetic waves emitted from the stator can be suppressed, and malfunction in electronic components can be inhibited.

The synthetic resin of which the housing of the stator unit is made includes the electromagnetic wave suppression material. With this configuration, the electromagnetic wave suppression material is included in the synthetic resin of which the housing is made, preventing the electromagnetic wave suppression material from coming off. Therefore, electromagnetic waves emitted from the stator can be suppressed, and malfunction in electronic components can be inhibited.

### Brief Description of Drawings

[Fig. 1] Fig. 1 is a sectional view of an electric valve according to an embodiment of the present invention.
[Fig. 2] Fig. 2 is a sectional view of a valve body assembly included in the electric valve in Fig. 1.
[Fig. 3] Fig. 3 is a sectional view of a stator unit included in the electric valve in Fig. 1.
[Fig. 4] Fig. 4 is a sectional view of a stator included in the stator unit in Fig. 3, with an electromagnetic wave suppression film formed on the surface of the stator.
[Fig. 5] Fig. 5 is a sectional view of the stator before the electromagnetic wave suppression film is formed.
[Fig. 6] Fig. 6 is a perspective view of the stator with the electromagnetic wave suppression film formed on the surface of the stator.
[Fig. 7] Fig. 7 is a perspective view of the stator before the electromagnetic wave suppression film is formed.
[Fig .8] Fig. 8 is a side view of the stator with the electromagnetic wave suppression film formed on the surface of the stator.
[Fig. 9] Fig. 9 is a side view of the stator before the electromagnetic wave suppression film is formed.
[Fig. 10] Fig. 10 is a sectional view illustrating a configuration of a modification of the electric valve in Fig. 1.
[Fig. 11] Fig. 11 is a sectional view of a stator unit included in the electric valve in Fig. 10.

### Description of Embodiments

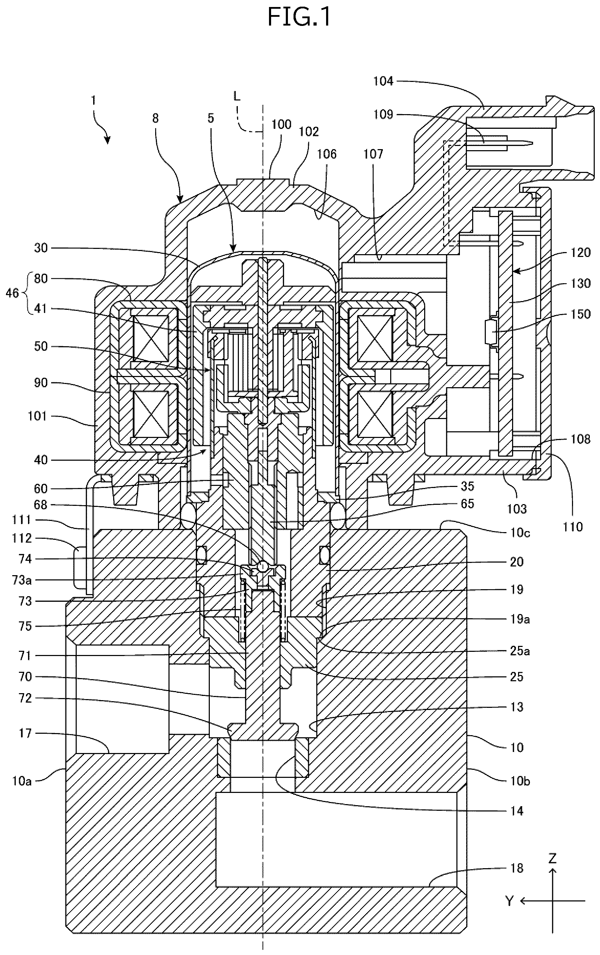

An electric valve according to an embodiment of the present invention is described below with reference to Figs. 1 to 11. The electric valve is, for example, installed in a vehicle or home air conditioning system. The electric valve according to the embodiment is, for example, used to control the flow rate of refrigerant.

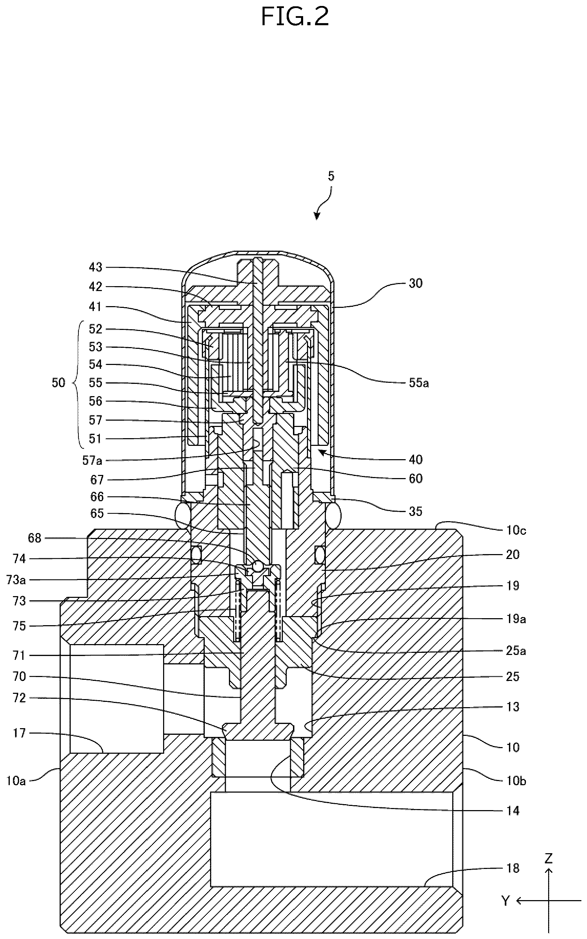

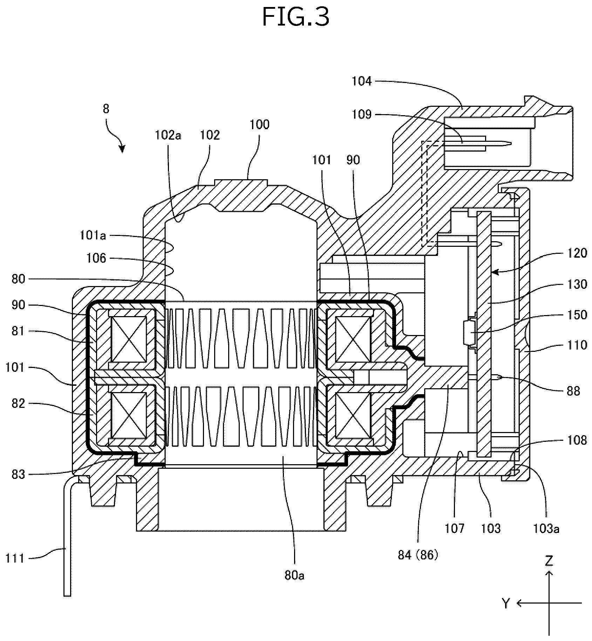

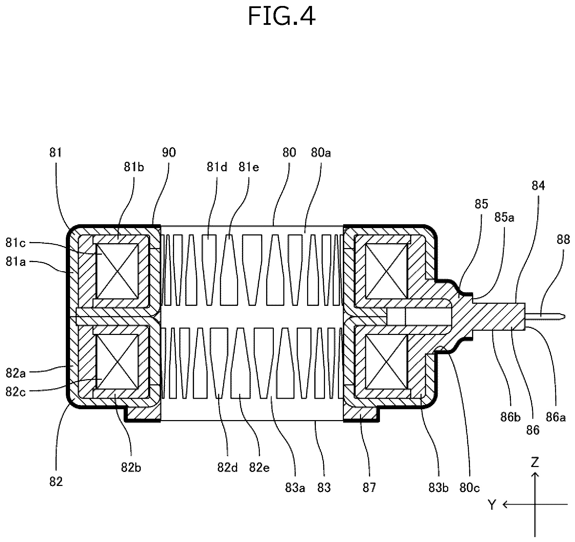

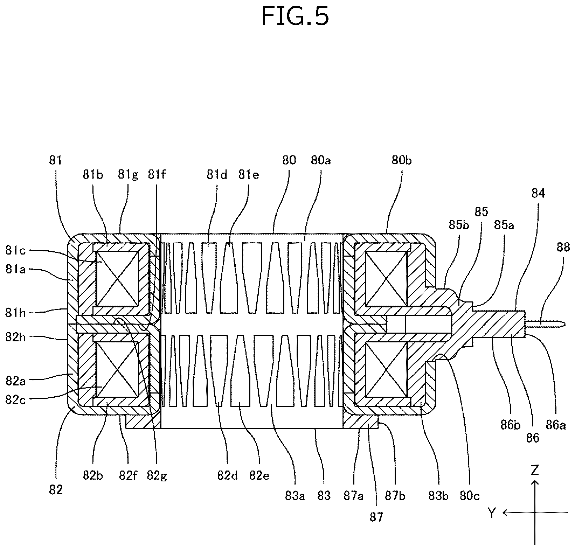

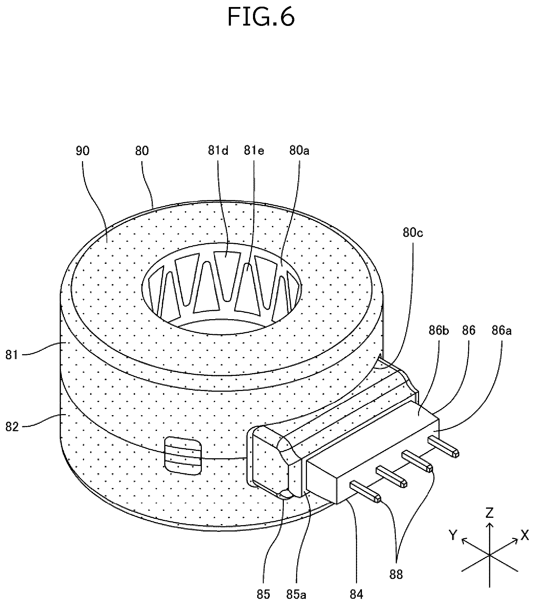

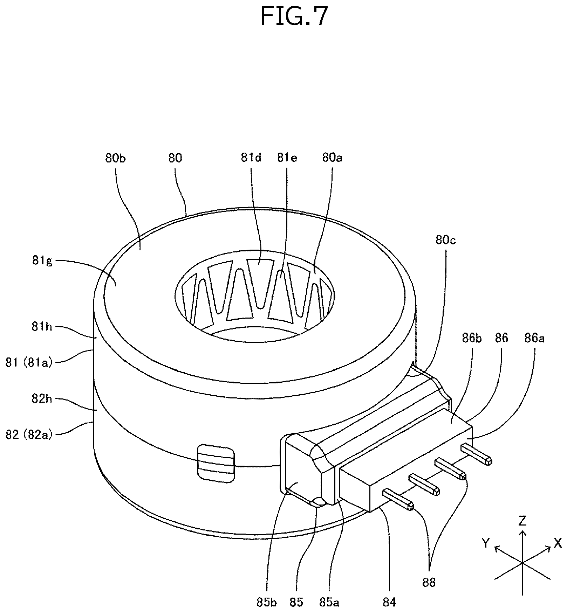

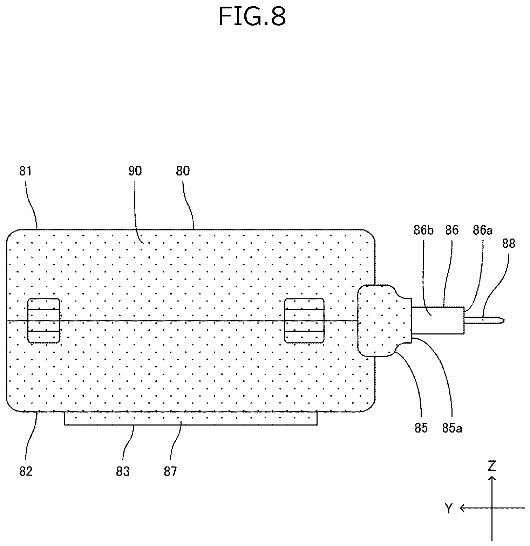

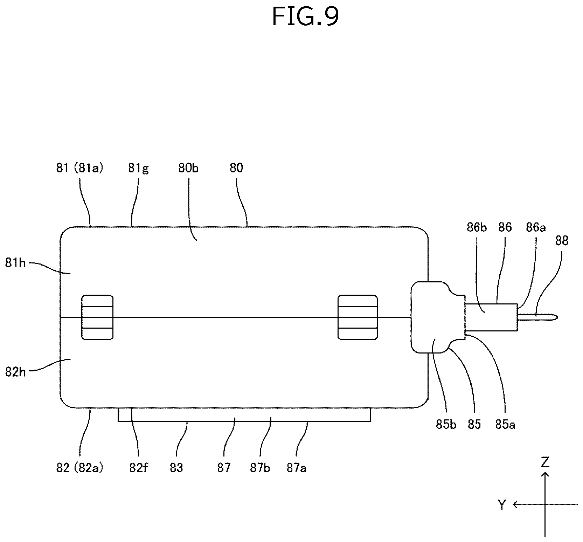

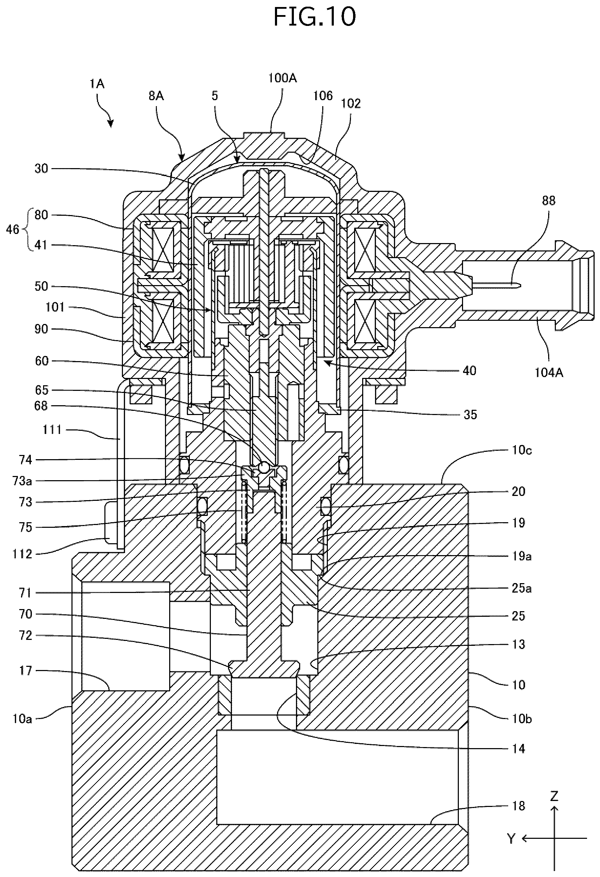

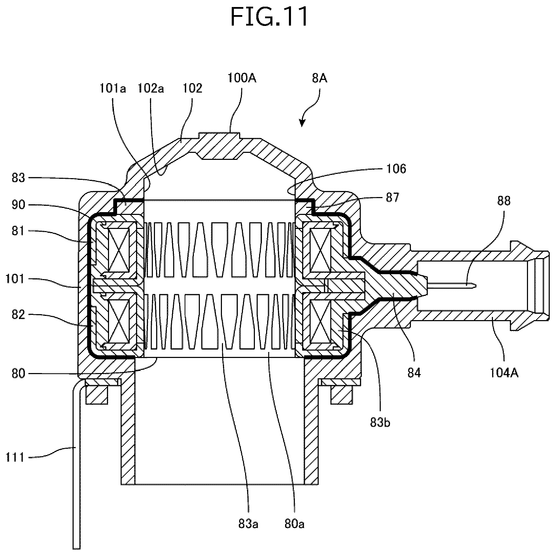

Fig. 1 is a sectional view of the electric valve according to the embodiment of the present invention. Fig. 2 is a sectional view of a valve body assembly included in the electric valve in Fig. 1. Fig. 3 is a sectional view of a stator unit included in the electric valve in Fig. 1. Figs. 4 to 9 are diagrams illustrating a stator included in the stator unit in Fig. 3. Figs. 4 and 5 are sectional views of the stator. Figs. 6 and 7 are perspective views of the stator. Figs. 8 and 9 are side views of the stator. Figs. 4, 6, and 8 illustrate the stator with an electromagnetic wave suppression film formed on the surface of the stator. Figs. 5, 7, and 9 illustrate the stator before the electromagnetic wave suppression film is formed. Fig. 10 is a sectional view illustrating a configuration of a modification of the electric valve in Fig. 1. Fig. 11 is a sectional view of a stator unit included in the electric valve in Fig. 10. In Figs. 3, 4, and 11, the electromagnetic wave suppression film is schematically illustrated using thick lines. In Figs. 6 and 8, the electromagnetic wave suppression film is schematically illustrated using dotted areas. In each figure, an X direction indicated by arrow X represents a left-and-right direction, a Y direction indicated by arrow Y represents a front-and-back direction, and a Z direction indicated by arrow Z represents an up-and-down direction. The direction indicated by arrow with the letter "X" is the right direction, the direction indicated by arrow with the letter "Y" is the back direction, and the direction indicated by arrow with the letter "Z" is the upward direction.

As illustrated in Fig. 1, an electric valve 1 according to the embodiment includes a valve body assembly 5 and a stator unit 8.

As illustrated in Fig. 2, the valve body assembly 5 includes a valve body 10, a holder 20, a valve-member supporting member 25, a can 30, a driving mechanism 40, and a valve member 70.

The valve body 10 has a rectangular parallelepiped shape. The valve body 10 has a valve chamber 13 and a valve port 14 connected to the valve chamber 13. The valve body 10 has a first passage 17 and a second passage 18. One end of the first passage 17 is connected to the valve chamber 13, while the other end thereof opens on a back surface 10a of the valve body 10. One end of the second passage 18 is connected to the valve chamber 13 through the valve port 14, while the other end thereof opens on a front surface 10b of the valve body 10. The valve body 10 has a mounting hole 19. The mounting hole 19 is provided in an upper surface 10c of the valve body 10. An internal thread is provided on the inner circumferential surface of the mounting hole 19. The valve chamber 13 is connected to the lower end of the mounting hole 19.

The holder 20 has a circular cylindrical shape. The lower part of the holder 20 is disposed in the mounting hole 19. An external thread is provided on the outer circumferential surface of the holder 20. The external thread of the holder 20 is screwed into the internal thread of the mounting hole 19 of the valve body 10. The holder 20 is mounted on the valve body 10 by a screw structure. The upper part of the holder 20 projects from the upper surface 10c.

The valve-member supporting member 25 has a circular cylindrical shape. The valve-member supporting member 25 is disposed in the mounting hole 19 between the valve body 10 and the holder 20. The lower part of the valve-member supporting member 25 is press-fitted into the valve chamber 13. An annular flat surface 25a is provided on the outer circumferential surface of the valve-member supporting member 25. The annular flat surface 25a faces downward. The annular flat surface 25a is in contact with a bottom surface 19a of the mounting hole 19. The valve-member supporting member 25 supports the valve member 70 to be movable in the up-and-down direction.

The can 30 has a circular cylindrical shape. The can 30 is closed at the upper end and is open at the lower end. The lower end of the can 30 is bonded to the outer peripheral edge of a joint member 35 that has a circular annular plate-like shape. The upper part of the holder 20 is disposed in the joint member 35. The inner peripheral edge of the joint member 35 is bonded to the holder 20. The can 30 is a case mounted on the valve body 10 by using the joint member 35 and the holder 20.

The driving mechanism 40 moves the valve member 70 in the up-and-down direction. The driving mechanism 40 includes a magnet rotor 41, a planetary gear mechanism 50, a guide member 60, a driving shaft 65, and a ball 68.

The magnet rotor 41 has a circular cylindrical shape. The magnet rotor 41 is disposed inside the can 30. The outer diameter of the magnet rotor 41 is slightly smaller than the inner diameter of the can 30. The magnet rotor 41 has a plurality of north (N) poles and a plurality of south (S) poles. The N poles and the S poles are disposed on the outer circumferential surface of the magnet rotor 41. The N poles and the S poles each extend in the up-and-down direction. The N poles and the S poles are alternately arranged at regular intervals in the circumferential direction. In the embodiment, the magnet rotor 41 has twelve N poles and twelve S poles.

A coupling element 42 has a disc shape and is bonded to the upper end of the magnet rotor 41. The coupling element 42 closes the upper end of the magnet rotor 41. A rotor shaft 43 extends through the center of the coupling element 42. The magnet rotor 41 is coupled with the rotor shaft 43 via the coupling element 42.

The planetary gear mechanism 50 is disposed in the magnet rotor 41. The planetary gear mechanism 50 includes a gear case 51, a fixed ring gear 52, a sun gear 53, planetary gears 54, a carrier 55, an output gear 56, and an output shaft 57.

The gear case 51 has a circular cylindrical shape. The gear case 51 is bonded coaxially to the upper part of the holder 20. The fixed ring gear 52 is an internal gear. The fixed ring gear 52 is fixed to the upper end of the gear case 51. The sun gear 53 is disposed coaxially with the coupling element 42. The sun gear 53 is integrated with the coupling element 42. The rotor shaft 43 extends through the sun gear 53. The sun gear 53 is rotated together with the magnet rotor 41 and the coupling element 42.

The planetary gears 54 are disposed between the fixed ring gear 52 and the sun gear 53. The carrier 55 has a disc shape. The rotor shaft 43 extends through the center of the carrier 55. The carrier 55 can rotate about the rotor shaft 43. The carrier 55 includes supporting shafts 55a. The supporting shafts 55a rotatably support the planetary gears 54. The output gear 56 has a bottomed circular cylindrical shape. The output gear 56 is an internal gear. The planetary gears 54 are disposed between the output gear 56 and the sun gear 53.

The output shaft 57 has a circular columnar shape. The upper part of the output shaft 57 is disposed in a hole provided in the bottom of the output gear 56. The output shaft 57 is secured to the output gear 56. The lower part of the output shaft 57 has a slit 57a extending in the up-and-down direction. The fixed ring gear 52, the planetary gears 54, the carrier 55, and the output gear 56 together reduce the rotational speed of the sun gear 53 and transmit the rotation of the sun gear 53 to the output shaft 57.

The guide member 60 has a circular cylindrical shape. The guide member 60 is disposed in the upper part of the holder 20. The guide member 60 is secured to the holder 20. An internal thread is provided on the lower part of the inner circumferential surface of the guide member 60. The output shaft 57 is disposed in the guide member 60. The guide member 60 rotatably supports the output shaft 57.

The driving shaft 65 includes a circular columnar portion 66 and a flat plate portion 67. The flat plate portion 67 is connected to the upper end of the circular columnar portion 66. The circular columnar portion 66 and the flat plate portion 67 are integrally formed. An external thread is provided on the outer circumferential surface of the circular columnar portion 66. The external thread of the circular columnar portion 66 is screwed into the internal thread of the guide member 60. The flat plate portion 67 is disposed in the slit 57a of the output shaft 57 and is movable in the up-and-down direction. The driving shaft 65 is rotated by the output shaft 57 and is moved in the up-and-down direction by a screw-feed action.

The valve member 70 includes a stem 71, a valve portion 72, a spring receiving portion 73, and a ball receiving portion 74.

The stem 71 has a circular columnar shape. The stem 71 is disposed in the valve-member supporting member 25. The valve-member supporting member 25 supports the stem 71 to be movable in the up-and-down direction.

The valve portion 72 is disposed at the lower end of the stem 71. The valve portion 72 has a circular annular shape. The valve portion 72 projects radially outward from the outer circumferential surface of the stem 71. The valve portion 72 faces the valve port 14 in the up-and-down direction.

The spring receiving portion 73 has a circular columnar shape. The spring receiving portion 73 is bonded to the upper end of the stem 71. The spring receiving portion 73 includes a flange portion 73a projecting radially outward.

The ball receiving portion 74 integrally includes a flat plate that has a circular shape and a projection that is connected to the lower surface of the flat plate. The projection is fitted into a hole provided in the upper end surface of the spring receiving portion 73. The ball 68 is disposed between the flat plate of the ball receiving portion 74 and the driving shaft 65. The ball 68 is bonded to the lower end of the driving shaft 65.

A valve opening spring 75 is disposed between the flange portion 73a of the spring receiving portion 73 and the valve-member supporting member 25. The valve opening spring 75 is a compression coil spring. The valve opening spring 75 pushes the valve member 70 (the flange portion 73a) upward. The valve portion 72 moving toward and away from the valve port 14 causes the valve member 70 to change the opening area of the valve port 14 in a stepless manner (including a substantially stepless manner). In the embodiment, the minimum area of the valve port 14 is zero (i.e., the valve port 14 is closed). The minimum area of the valve port 14 may be greater than zero (i.e., the valve port 14 may be slightly open).

As illustrated in Fig. 3, the stator unit 8 includes a stator 80, an electromagnetic wave suppression film 90, a housing 100, a lid 110, and a control device 120.

As illustrated in Figs. 4 to 9, the stator 80 has a circular cylindrical shape. The stator 80 includes an A-phase stator 81, a B-phase stator 82, and a resin member 83.

The A-phase stator 81 includes an A-phase yoke 81a, an A-phase bobbin 81b, and an A-phase coil 81c.

The A-phase yoke 81a has a hollow circular annular shape. The A-phase yoke 81a has a cross section rectangular in the radial direction. The A-phase yoke 81a is made of a metal. The A-phase yoke 81a includes a plurality of claw-pole type pole teeth 81d and pole teeth 81e in the inner circumference. The tip ends of the pole teeth 81d point downward, and the tip ends of the pole teeth 81e point upward. The pole teeth 81d and the pole teeth 81e are alternately arranged at regular angular intervals in the circumferential direction. In the embodiment, the A-phase yoke 81a has twelve pole teeth 81d and twelve pole teeth 81e.

The A-phase bobbin 81b integrally includes a circular cylindrical portion and flange portions that project radially outward from the upper end and the lower end of the circular cylindrical portion. The A-phase bobbin 81b is made of a synthetic resin. The A-phase bobbin 81b is disposed in the inner space of the A-phase yoke 81a and is coaxial with the A-phase yoke 81a. The A-phase coil 81c is wound around the A-phase bobbin 81b. When a current is supplied to the A-phase coil 81c, the pole teeth 81d and the pole teeth 81e have opposite polarities.

The B-phase stator 82 includes a B-phase yoke 82a, a B-phase bobbin 82b, and a B-phase coil 82c.

The B-phase yoke 82a has a hollow circular annular shape. The B-phase yoke 82a has a cross section rectangular in the radial direction. The B-phase yoke 82a is made of a metal. The B-phase yoke 82a includes a plurality of claw-pole type pole teeth 82d and pole teeth 82e in the inner circumference. The tip ends of the pole teeth 82d point downward, and the tip ends of the pole teeth 82e point upward. The pole teeth 82d and the pole teeth 82e are alternately arranged at regular angular intervals in the circumferential direction. In the embodiment, the B-phase yoke 82a has twelve pole teeth 82d and twelve pole teeth 82e.

The B-phase bobbin 82b integrally includes a circular cylindrical portion and flange portions that project radially outward from the upper end and the lower end of the circular cylindrical portion. The B-phase bobbin 82b is made of a synthetic resin. The B-phase bobbin 82b is disposed in the inner space of the B-phase yoke 82a and is coaxial with the B-phase yoke 82a. The B-phase coil 82c is wound around the B-phase bobbin 82b. When a current is supplied to the B-phase coil 82c, the pole teeth 82d and the pole teeth 82e have opposite polarities. The B-phase stator 82 has the same (including substantially the same) configuration as the A-phase stator 81.

The A-phase yoke 81a is disposed coaxially with the B-phase yoke 82a. A lower surface 81f of the A-phase yoke 81a and an upper surface 82g of the B-phase yoke 82a are in contact with each other. When viewed in the up-and-down direction (a direction of an axis L), the angle between the pole tooth 81d of the A-phase yoke 81a and the pole tooth 82d of the B-phase yoke 82a adjacent to each other is 7.5 degrees.

A yoke outer surface 80b includes an upper surface 81g of the A-phase yoke 81a, an outer circumferential surface 81h of the A-phase yoke 81a, an outer circumferential surface 82h of the B-phase yoke 82a, and a lower surface 82f of the B-phase yoke 82a.

The lower surface 81f is a first end surface of the A-phase yoke 81a, and the upper surface 81g is a second end surface of the A-phase yoke 81a. The upper surface 82g is a first end surface of the B-phase yoke 82a, and the lower surface 82f is a second end surface of the B-phase yoke 82a.

The resin member 83 is integrally molded by injection molding (insert molding) with the A-phase stator 81 and the B-phase stator 82. The synthetic resin of which the resin member 83 is made is, for example, polyphenylene sulfide (PPS) or polybutylene terephthalate (PBT).

The resin member 83 includes a first part 83a and a second part 83b. The first part 83a forms a stator inner-circumferential surface 80a together with the pole teeth 81d, 81e, 82d, and 82e. The diameter of the stator inner-circumferential surface 80a is equal (including substantially equal) to the outer diameter of the can 30. The second part 83b fills the inner space of the A-phase yoke 81a and the inner space of the B-phase yoke 82a.

The resin member 83 further includes a terminal supporting portion 84 and an annular portion 87.

The terminal supporting portion 84 extends in a front direction (a direction perpendicular to the axis L) from a yoke opening 80c provided across the outer circumferential surface 81h of the A-phase yoke 81a and the outer circumferential surface 82h of the B-phase yoke 82a. The terminal supporting portion 84 supports a plurality of coil terminals 88. The coil terminals 88 are connected to the A-phase coil 81c and the B-phase coil 82c.

The terminal supporting portion 84 includes a base portion 85 and a tip end portion 86. The base portion 85 is connected to the second part 83b. The base portion 85 extends through the yoke opening 80c, from the interior to the exterior of both the A-phase yoke 81a and the B-phase yoke 82a. The tip end portion 86 is connected to a tip end surface 85a of the base portion 85. The coil terminals 88 project from a tip end surface 86a of the tip end portion 86.

The annular portion 87 has a circular annular shape. The inner diameter of the annular portion 87 is equal (including substantially equal) to the diameter of the stator inner-circumferential surface 80a. The annular portion 87 is disposed on the lower surface 82f of the B-phase yoke 82a and is coaxial with the B-phase yoke 82a. The annular portion 87 may be disposed on the upper surface 81g of the A-phase yoke 81a and be coaxial with the A-phase yoke 81a. The annular portion 87 is connected to the first part 83a of the resin member 83. In a mold for the stator 80, a gate is connected to a cavity that corresponds to the annular portion 87. When the resin member 83 is injection-molded, resin material flows in the cavity in a circumferential direction and enters spaces between the pole teeth 81d, 81e, 82d, and 82e, forming the first part 83a. The annular portion 87 may be omitted in the resin member 83.

The stator 80 is disposed outside the can 30. The magnet rotor 41 is disposed inside the can 30. The magnet rotor 41 and the stator 80 are members of a stepping motor 46.

The electromagnetic wave suppression film 90 is formed from paint (electromagnetic wave suppression paint) containing a material with properties that effectively suppress electromagnetic waves. Metals such as silver, copper, and nickel are materials with properties that effectively suppress electromagnetic waves. For example, paint referred to as silver paste or copper paste can be used as the electromagnetic wave suppression paint. The electromagnetic wave suppression film 90 is formed by applying the electromagnetic wave suppression paint on a surface of the stator 80. The electromagnetic wave suppression film 90 may be a sheet (an electromagnetic wave suppression sheet) containing a material with properties that effectively suppress electromagnetic waves and being stuck on the surface of the stator 80.

The electromagnetic wave suppression film 90 is disposed on the yoke outer surface 80b (the upper surface 81g, the outer circumferential surface 81h, the outer circumferential surface 82h, and the lower surface 82f). The electromagnetic wave suppression film 90 is also disposed on a peripheral surface 85b of the base portion 85 of the terminal supporting portion 84. The electromagnetic wave suppression film 90 is also disposed on a lower surface 87a and an outer circumferential surface 87b of the annular portion 87.

The housing 100 is made of a synthetic resin. The synthetic resin of which the housing 100 is made is, for example, polyphenylene sulfide (PPS) or polybutylene terephthalate (PBT). A synthetic resin (an electromagnetic wave suppression synthetic resin) containing a material with properties that effectively suppress electromagnetic waves can be used as the synthetic resin of which the housing 100 is made. For example, PPS containing 5% to 40% by weight of silver powder, silver-plated copper powder, nickel powder, or carbon black is used as the electromagnetic wave suppression synthetic resin. Silver powder, silver-plated copper powder, nickel powder, and carbon black are electromagnetic wave suppression materials with properties that effectively suppress electromagnetic waves. In a configuration in which the housing 100 is made of the electromagnetic wave suppression synthetic resin, the electromagnetic wave suppression film 90 may be omitted in the stator unit 8.

The housing 100 houses the stator 80 and the control device 120. The housing 100 is integrally molded by injection molding (insert molding) with the stator 80 with the electromagnetic wave suppression film 90 formed on the surface of the stator 80.

The housing 100 integrally includes a peripheral wall 101, an upper wall 102, a case 103, and a connector 104. The lid 110 is bonded to the case 103 of the housing 100. The lid 110 has a flat plate-like shape.

The peripheral wall 101 has a circular cylindrical shape. The stator 80 is embedded in the peripheral wall 101. The electromagnetic wave suppression film 90 is disposed between the stator 80 and the peripheral wall 101. The diameter of an inner circumferential surface 101a of the peripheral wall 101 is equal to the diameter of the stator inner-circumferential surface 80a. The inner circumferential surface 101a is continuous with and flush with the stator inner-circumferential surface 80a. The upper wall 102 has a dome shape. The upper wall 102 is connected to the upper end of the peripheral wall 101. The inner circumferential surface 101a of the peripheral wall 101, an inner surface 102a of the upper wall 102, and the stator inner-circumferential surface 80a form an inner space 106 of the stator unit 8. The can 30 is disposed in the inner space 106.

The case 103 has a quadrangular tubular shape and extends from the peripheral wall 101 in the front direction. The inner space of the case 103 is a circuit-board housing space 107. An opening 108 is provided at a tip end 103a of the case 103 and communicates with the circuit-board housing space 107. The lid 110 is bonded to the tip end 103a of the case 103 and covers the opening 108. The lid 110 closes the opening 108. The connector 104 is disposed on the upper surface of the case 103. The connector 104 has a tubular shape and extends in the front-and-back direction. An opening is provided at the tip end of the connector 104 and faces the front direction.

The circuit-board housing space 107 is situated adjacent to the inner space 106. The stator 80 and the peripheral wall 101 are disposed between the inner space 106 and the circuit-board housing space 107. The stator 80 and the peripheral wall 101 separate the inner space 106 from the circuit-board housing space 107. The tip end portion 86 of the terminal supporting portion 84 of the stator 80 projects from the peripheral wall 101 and is disposed in the circuit-board housing space 107. The electromagnetic wave suppression film 90 is not formed on the tip end surface 86a and a peripheral surface 86b of the tip end portion 86, and the tip end surface 86a and the peripheral surface 86b directly face the circuit-board housing space 107. A plurality of connector terminals 109 are embedded in the housing 100. One end of each of the connector terminals 109 is disposed in the inner space of the connector 104. The other end of each of the connector terminals 109 is disposed in the circuit-board housing space 107.

A bracket 111 is mounted on the peripheral wall 101. The bracket 111 is fixed to the valve body 10 with a screw 112, securing the stator unit 8 to the valve body assembly 5.

The control device 120 is disposed in the circuit-board housing space 107 of the housing 100. The control device 120 includes a circuit board 130 and a microcomputer 150.

The circuit board 130 is a printed circuit board on which electronic components are mounted. The circuit board 130 is disposed in the circuit-board housing space 107. The circuit board 130 is oriented in the up-and-down and left-and-right directions (parallel to the XZ plane). The microcomputer 150 is mounted on the circuit board 130. The coil terminals 88 of the stator 80 are connected to the circuit board 130. The other end of each of the connector terminals 109 is connected to the circuit board 130.

The microcomputer 150 is a microcomputer for embedded devices and integrates a central processing unit, a nonvolatile memory, a working memory, a communication module, a motor driver, and so forth in one package. The microcomputer 150 controls the electric valve 1. The nonvolatile memory, the working memory, the communication module, and the motor driver may be separate electronic components that are externally connected to the microcomputer 150.

The control device 120 is connected to and can communicate with a control unit of an air conditioning system (not illustrated) in which the electric valve 1 is installed. The control device 120 is connected to the control unit by a cable. The cable has a connector (a plug), which is fitted into the connector 104 (a receptacle). The control unit is an external device. The control device 120 controls the stepping motor 46 (i.e., the rotation of the magnet rotor 41) in response to commands from the control unit. In a configuration in which the control device 120 is omitted, the control unit of the air conditioning system may control the electric valve 1 directly.

In the electric valve 1, respective central axes of the valve port 14, the holder 20, the valve-member supporting member 25, the can 30, the magnet rotor 41, the coupling element 42, the rotor shaft 43, the sun gear 53, the output shaft 57, the guide member 60, the driving shaft 65, the ball 68, the valve member 70 (the stem 71, the valve portion 72, the spring receiving portion 73, and the ball receiving portion 74), and the stator 80 (the A-phase stator 81 and the B-phase stator 82) are aligned with the axis L. The axis L is parallel to the up-and-down direction.

The operation of the electric valve 1 is described below.

In the electric valve 1, currents are supplied to the A-phase coil 81c and the B-phase coil 82c to rotate the magnet rotor 41 in one direction. The planetary gear mechanism 50 transmits the rotation of the magnet rotor 41 to the driving shaft 65. The screw-feed action between the driving shaft 65 and the guide member 60 moves the driving shaft 65 downward. The driving shaft 65 pushes the valve member 70 downward, decreasing the opening area of the valve port 14.

In the electric valve 1, currents are supplied to the A-phase coil 81c and the B-phase coil 82c to rotate the magnet rotor 41 in the other direction. The planetary gear mechanism 50 transmits the rotation of the magnet rotor 41 to the driving shaft 65. The screw-feed action between the driving shaft 65 and the guide member 60 moves the driving shaft 65 upward. The valve opening spring 75 pushes the valve member 70 upward, increasing the opening area of the valve port 14.

The method for manufacturing the stator unit 8 of the electric valve 1 is described below.

The stator 80 is manufactured by placing the A-phase stator 81 and the B-phase stator 82 in the mold for the stator 80 and integrally forming the resin member 83 with the A-phase stator 81 and the B-phase stator 82 through injection molding.

Next, the electromagnetic wave suppression film 90 is formed on the surface of the stator 80. Specifically, the electromagnetic wave suppression paint is applied to the yoke outer surface 80b, the peripheral surface 85b of the base portion 85, the lower surface 87a of the annular portion 87, and the outer circumferential surface 87b of the annular portion 87. No electromagnetic wave suppression paint is applied to any surfaces of the stator 80 other than these surfaces. In other words, no electromagnetic wave suppression paint is applied to the stator inner-circumferential surface 80a, the tip end surface 85a of the base portion 85, the tip end surface 86a of the tip end portion 86, and the peripheral surface 86b of the tip end portion 86. The electromagnetic wave suppression film 90 is formed as the electromagnetic wave suppression paint dries.

Next, the housing 100 is injection-molded so that the housing 100 covers the electromagnetic wave suppression film 90. Specifically, the stator 80 with the electromagnetic wave suppression film 90 on its surface and the connector terminals 109 are placed in a mold for the housing 100. Then, the housing 100 is integrally molded with the stator 80 (with the electromagnetic wave suppression film 90) and the connector terminals 109 through injection molding. Consequently, the electromagnetic wave suppression film 90 is disposed between the stator 80 and the peripheral wall 101 of the housing 100. In the embodiment, the electromagnetic wave suppression film 90 is placed only between the stator 80 and the peripheral wall 101 and is exposed to neither the inner space 106 nor the circuit-board housing space 107. The lid 110 is injection-molded separately from the housing 100.

The control device 120 is placed in the circuit-board housing space 107 of the case 103 of the housing 100. The coil terminals 88 and the other end of each of the connector terminals 109 is soldered to the circuit board 130 of the control device 120. The lid 110 is bonded to the tip end 103a of the case 103. The bonding method is infrared welding, ultrasonic welding, joining with an adhesive, or the like. The bracket 111 is mounted on the peripheral wall 101 of the housing 100. In this way, the stator unit 8 is completed. No electromagnetic wave suppression film 90 is exposed on the outer surface of the stator unit 8.

The electric valve 1 according to the embodiment includes the valve body assembly 5 and the stator unit 8. The valve body assembly 5 includes the can 30 that has the circular cylindrical shape and the magnet rotor 41 that is disposed inside the can 30.

The stator unit 8 includes the stator 80 that is disposed outside the can 30 and the housing 100 that is made of a synthetic resin and is integrally molded with the stator 80. The stator unit 8 includes the electromagnetic wave suppression film 90 that is disposed between the stator 80 and the housing 100. With this configuration, the electromagnetic wave suppression film 90 is held between the stator 80 and the housing 100, inhibiting the electromagnetic wave suppression film 90 from coming off. Therefore, electromagnetic waves emitted from the stator 80 can be suppressed, and malfunction in electronic components can be inhibited.

The stator 80 includes the A-phase stator 81 and the B-phase stator 82. The A-phase stator 81 includes the A-phase yoke 81a that has the hollow circular annular shape, the A-phase bobbin 81b that is disposed in the A-phase yoke 81a, and the A-phase coil 81c that is wound around the A-phase bobbin 81b. The B-phase stator 82 includes the B-phase yoke 82a that has the hollow circular annular shape, the B-phase bobbin 82b that is disposed in the B-phase yoke 82a, and the B-phase coil 82c that is wound around the B-phase bobbin 82b. The A-phase stator 81 is disposed coaxially with the B-phase stator 82. The lower surface 81f of the A-phase yoke 81a is in contact with the upper surface 82g of the B-phase yoke 82a. The upper surface 81g of the A-phase yoke 81a, the outer circumferential surface 81h of the A-phase yoke 81a, the lower surface 82f of the B-phase yoke 82a, and the outer circumferential surface 82h of the B-phase yoke 82a form the yoke outer surface 80b. The electromagnetic wave suppression film 90 is disposed between the yoke outer surface 80b and the housing 100. With this configuration, electromagnetic waves emitted through the A-phase yoke 81a and the B-phase yoke 82a can be effectively inhibited.

The stator 80 further includes the resin member 83 that is integrally molded with the A-phase stator 81 and the B-phase stator 82. The resin member 83 includes the terminal supporting portion 84. The terminal supporting portion 84 extends from the A-phase yoke 81a and the B-phase yoke 82a in the front direction. The coil terminals 88 connected to the A-phase coil 81c and the B-phase coil 82c project from the tip end surface 86a of the tip end portion 86 of the terminal supporting portion 84. The electromagnetic wave suppression film 90 is disposed between the terminal supporting portion 84 (the peripheral surface 85b of the base portion 85) and the housing 100. With this configuration, electromagnetic waves emitted through the terminal supporting portion 84 can be effectively inhibited.

The resin member 83 further includes the annular portion 87 that has the circular annular shape. The annular portion 87 is disposed on the lower surface 82f of the B-phase yoke 82a. The electromagnetic wave suppression film 90 is disposed between the annular portion 87 (the lower surface 87a and the outer circumferential surface 87b) and the housing 100. With this configuration, electromagnetic waves emitted through the annular portion 87 can be effectively inhibited.

The tip end portion 86 of the terminal supporting portion 84 is disposed in the circuit-board housing space 107 provided in the housing 100. The coil terminals 88 are connected to the circuit board 130 disposed in the circuit-board housing space 107. The entire surface (the tip end surface 86a and the peripheral surface 86b) of the tip end portion 86 directly faces the circuit-board housing space 107. With this configuration, no electromagnetic wave suppression film 90 is formed on the surface of the tip end portion 86 disposed in the circuit-board housing space 107. This prevents the electromagnetic wave suppression film 90 from coming off and falling into the circuit-board housing space 107, thereby more effectively inhibiting malfunctions in the electronic components mounted on the circuit board 130. The tip end portion 86 is a part of the terminal supporting portion 84, and the part includes the tip end surface 86a. The electromagnetic wave suppression film 90 may be disposed on the peripheral surface 86b of the tip end portion 86.

The synthetic resin of which the housing 100 is made may contain an electromagnetic wave suppression material. With this configuration, electromagnetic waves emitted from the stator 80 can be more effectively inhibited.

Fig. 10 illustrates an electric valve 1A, which has a configuration of a modification of the electric valve 1. In the electric valve 1A, elements having the same (including substantially the same) configurations as those of the electric valve 1 are denoted by the same reference signs as those of the electric valve 1, and detailed descriptions of these elements are omitted.

The electric valve 1A includes a valve body assembly 5 and a stator unit 8A. As illustrated in Fig. 11, the stator unit 8A includes a stator 80, an electromagnetic wave suppression film 90, and a housing 100A.

The housing 100A houses the stator 80. The housing 100A is integrally molded by injection molding (insert molding) with the stator 80 with the electromagnetic wave suppression film 90 formed on the surface of the stator 80. The electromagnetic wave suppression film 90 is disposed between the stator 80 and the housing 100A. In the electric valve 1A, the stator 80 includes an annular portion 87 that is disposed on the upper surface of an A-phase stator 81.

The housing 100A integrally includes a peripheral wall 101, an upper wall 102, and a connector 104A. The connector 104A has a tubular shape and extends from the peripheral wall 101 in a front direction. The tip end of a terminal supporting portion 84 is disposed in the inner space of the connector 104A. Coil terminals 88 extend from the tip end surface of the terminal supporting portion 84 in the front direction. The coil terminals 88 serve as connector terminals.

The electric valve 1A has the same (including substantially the same) functions and effects as those of the electric valve 1.

The electric valve 1 according to the embodiment has a configuration in which the rotational speed of the magnet rotor 41 is reduced and the rotation of the magnet rotor 41 is transmitted to the driving shaft 65. The electric valve 1 can be a direct drive electric valve in which the rotation of the magnet rotor 41 is transmitted directly to the driving shaft 65.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

### Reference Signs List

1, 1A ... electric valve
5 ... valve body assembly, 10 ... valve body, 10a ... back surface, 10b ... front surface, 10c ... upper surface, 13 ... valve chamber, 14 ... valve port, 17 ... first passage, 18 ... second passage, 19 ... mounting hole, 19a ... bottom surface, 20 ... holder, 25 ... valve-member supporting member, 25a ... annular flat surface, 30 ... can, 35 ... joint member, 40 ... driving mechanism, 41 ... magnet rotor, 42 ... coupling element, 43 ... rotor shaft, 46 ... stepping motor, 50 ... planetary gear mechanism, 51 ... gear case, 52 ... fixed ring gear, 53 ... sun gear, 54 ... planetary gear, 55 ... carrier, 55a ... supporting shaft, 56 ... output gear, 57 ... output shaft, 57a ... slit, 60 ... guide member, 65 ... driving shaft, 66 ... circular columnar portion, 67 ... flat plate portion, 68 ... ball, 70 ... valve member, 71 ... stem, 72 ... valve portion, 73 ... spring receiving portion, 73a ... flange portion, 74 ... ball receiving portion, 75 ... valve opening spring
8, 8A ... stator unit, 80 ... stator, 80a ... stator inner-circumferential surface, 80b ... yoke outer surface, 80c ... yoke opening, 81 ... A-phase stator, 81a ... A-phase yoke, 81b ... A-phase bobbin, 81c ... A-phase coil, 81d ... pole tooth, 81e ... pole tooth, 81f ... lower surface, 81g ... upper surface, 81h ... outer circumferential surface, 82 ... B-phase stator, 82a ... B-phase yoke, 82b ... B-phase bobbin, 82c ... B-phase coil, 82d ... pole tooth, 82e ... pole tooth, 82f ... lower surface, 82g ... upper surface, 82h ... outer circumferential surface, 83 ... resin member, 83a ... first part, 83b ... second part, 84 ... terminal supporting portion, 85 ... base portion, 85a ... tip end surface, 85b ... peripheral surface, 86 ... tip end portion, 86a ... tip end surface, 86b ... peripheral surface, 87 ... annular portion, 87a ... lower surface, 87b ... outer circumferential surface, 90 ... electromagnetic wave suppression film, 100, 100A ... housing, 101 ... peripheral wall, 101a ... inner circumferential surface, 102 ... upper wall, 102a ... inner surface, 103 ... case, 103a ... tip end, 104, 104A ... connector, 106 ... inner space, 107 ... circuit-board housing space, 108 ... opening, 109 ... connector terminal, 110 ... lid, 111 ... bracket, 112 ... screw, 120 ... control device, 130 ... circuit board, 150 ... microcomputer, L ... axis.

## Claims

1. A stator unit comprising:
a stator;
a housing that is made of a synthetic resin and is integrally molded with the stator; and
an electromagnetic wave suppression film disposed between the stator and the housing.

2. The stator unit according to Claim 1,
wherein the stator includes an A-phase stator and a B-phase stator,
wherein the A-phase stator includes an A-phase yoke that has a hollow circular annular shape, an A-phase bobbin that is disposed in the A-phase yoke, and an A-phase coil that is wound around the A-phase bobbin,
wherein the B-phase stator includes a B-phase yoke that has a hollow circular annular shape, a B-phase bobbin that is disposed in the B-phase yoke, and a B-phase coil that is wound around the B-phase bobbin,
wherein the A-phase stator is disposed coaxially with the B-phase stator,
wherein a first end surface of the A-phase yoke is in contact with a first end surface of the B-phase yoke,
wherein a second end surface of the A-phase yoke, an outer circumferential surface of the A-phase yoke, a second end surface of the B-phase yoke, and an outer circumferential surface of the B-phase yoke form a yoke outer surface, and
wherein the electromagnetic wave suppression film is disposed between the yoke outer surface and the housing.

3. The stator unit according to Claim 2,
wherein the stator further includes a resin member that is integrally molded with the A-phase stator and the B-phase stator,
wherein the resin member includes a terminal supporting portion,
wherein the terminal supporting portion extends from the A-phase yoke and the B-phase yoke in a direction perpendicular to a direction of an axis,
wherein a coil terminal connected to the A-phase coil and a coil terminal connected to the B-phase coil project from a tip end surface of the terminal supporting portion, and
wherein the electromagnetic wave suppression film is disposed between the terminal supporting portion and the housing.

4. The stator unit according to Claim 3,
wherein the resin member further includes an annular portion that has a circular annular shape,
wherein the annular portion is disposed on the second end surface of the A-phase yoke or the second end surface of the B-phase yoke, and
wherein the electromagnetic wave suppression film is disposed between the annular portion and the housing.

5. The stator unit according to Claim 3,
wherein a part of the terminal supporting portion, the part including the tip end surface, is disposed in a circuit-board housing space provided in the housing,
wherein the coil terminal is connected to a circuit board disposed in the circuit-board housing space, and
wherein an entire surface of the part of the terminal supporting portion directly faces the circuit-board housing space.

6. The stator unit according to Claim 1, wherein the synthetic resin of which the housing is made includes an electromagnetic wave suppression material.

7. A stator unit comprising:
a stator; and
a housing that is made of a synthetic resin and is integrally molded with the stator,
wherein the synthetic resin of which the housing is made includes an electromagnetic wave suppression material.

8. An electric valve comprising:
a valve body assembly; and
the stator unit according to Claim 1 or 7,
wherein the valve body assembly includes a case having a circular cylindrical shape and a magnet rotor disposed inside the case, and
wherein the stator is disposed outside the case.

9. A method for manufacturing a stator unit including a stator and a housing that is made of a synthetic resin and is integrally molded with the stator,
the method comprising:
forming an electromagnetic wave suppression film on a surface of the stator, and
forming the housing by injection molding so that the housing covers the electromagnetic wave suppression film.
